# EUROPEAN PATENT APPLICATION

(11) **EP 3 388 701 A1**
(43) Date of publication of application: **17.10.2018**
(21) Application number: 16873052.1
(22) Date of filing: 08.12.2016
(51) Int. Cl.: F16C 33/28, F16C 17/10, F16C 33/12

(54) **SLIDING BEARING**

(30) Priority: 09.12.2015 JP 2015240550
(71) Applicant: Oiles Corporation, Tokyo 108-0075 (JP)
(72) Inventor: MORISHIGE, Kouichi, Fujisawa-shi Kanagawa 252-0811 (JP); SEKINE, Toshihiko, Fujisawa-shi Kanagawa 252-0811 (JP); IMAGAWA, Keisuke, Fujisawa-shi Kanagawa 252-0811 (JP)
(74) Representative: Puschmann Borchert Bardehle Patentanwälte Partnerschaft mbB
(86) International application number: PCT/JP2016/086479
(87) International publication number: WO 2017/099159

(57) **Abstract**

Provided is a sliding bearing that can inhibit the deformation of a flange caused by the urging force of a coil spring and can maintain the bearing function over a long period of time. A sliding bearing 1 is provided with: an upper case 2 formed from a synthetic resin material; a lower case 3 formed from a synthetic resin material and combined so as to be rotatable relative to the upper case 2; a sliding bearing piece 4 disposed between the upper case 2 and the lower case 3; and a reinforcing plate 6 formed from a metal material. The reinforcing plate 6 is annular and has a plate base 6a that is embedded in a flange 3D and a lower side part 3B2 of the lower case 3.

## Description

### [Technical Field]

The present invention relates to a sliding bearing made of synthetic resin and, particularly, to a sliding bearing to be built into an automobile as a sliding bearing of a strut type suspension (a MacPherson strut).

### [Background Art]

Generally, a sliding bearing for a strut type suspension is provided with: an upper case made of synthetic resin; a lower case made of synthetic resin; and a center plate which is disposed between the upper case and the lower case and which is a sliding bearing piece (for example, refer to PTL 1).

In the sliding bearing disclosed in PTL 1, the upper case has an upper base and an inner circumferential portion and an outer circumferential portion which extend toward a side of the lower case from the upper base, the lower case has a lower base and a flange which protrudes outward in a radial direction from the lower base, and an urged surface which is abutted by a coil spring of a suspension and which receives an urging force of the coil spring is defined on the lower base and the flange.

### [Citation List]

### [Patent Literature]

### [PTL 1]

Japanese Patent Application Publication No. 2013-96534

### [Summary of Invention]

### [Technical Problem]

With the sliding bearing disclosed in PTL 1, since the urging force of the coil spring is received by the urged surface of the flange of the lower case, the flange may deform due to creep deformation or the like during a prolonged period of use. The deformation may cause the flange to abut against the outer circumferential portion of the upper case and generate abnormal noise or cause a labyrinth clearance between the upper case and the lower case to expand to create a state where the labyrinth clearance becomes susceptible to penetration by foreign objects, thereby preventing functionality as a sliding bearing from being maintained over a long period of time.

In consideration thereof, an object of the present invention is to provide a sliding bearing that can inhibit the deformation of a flange of a lower case caused by the urging force of a coil spring and can maintain the bearing function over a long period of time.

### [Solution to Problem]

In order to solve the problem described above, a sliding bearing of the present invention has an annular shape and includes: an upper case formed from a synthetic resin material; a lower case formed from a synthetic resin material and combined so as to be rotatable relative to the upper case; a sliding bearing piece disposed between the upper case and the lower case; and a reinforcing plate formed from a metal material. The upper case has: an upper base having an annular shape; an inner circumferential portion having a cylindrical shape and extending from an inner circumferential edge of the upper base toward a side of the lower case; and an outer circumferential portion having a cylindrical shape and extending toward the side of the lower case from an outer circumferential edge of the upper base, the upper base, the inner circumferential portion, and the outer circumferential portion forming an annular concave portion. The lower case has: a lower base having an annular shape and having an upper side part positioned in the annular concave portion of the upper case and a lower side part positioned outside the annular concave portion; and a flange protruding outward in a radial direction from an outer circumferential edge of the lower side part and opposing the outer circumferential portion of the upper base of the upper case in an axial direction, and an urged surface against which a coil spring abuts and which receives an urging force of the coil spring is formed in the lower side part and the flange on a side opposite to a side of the upper case. The reinforcing plate is annular and has a plate base that is embedded in the lower side part and the flange of the lower case.

The lower case may have a case protrusion which protrudes from the lower side part of the lower base toward the side opposite to the side of the upper case, and the reinforcing plate may have a first plate protrusion which extends from an inner circumferential edge of the plate base toward the side opposite to the side of the upper case, and the first plate protrusion is embedded in the case protrusion.

A second plate protrusion which protrudes toward a side of the urged surface may be provided on an outer circumferential edge of the plate base of the reinforcing plate.

The plate base of the reinforcing plate may have a curved portion.

The reinforcing plate may be formed from an SUS material or steel with a surface subjected to plate processing.

The sliding bearing may further include a seal member which is disposed between the outer circumferential portion of the upper case and the lower base of the lower case and which closes a gap formed by the outer circumferential portion of the upper case and the lower base of the lower case.

### [Advantageous Effects of Invention]

According to the present invention, there can be provided a sliding bearing that can inhibit the deformation of a flange of a lower case caused by the urging force of a coil spring and can maintain the bearing function over a long period of time.

### [Brief Description of Drawings]

[Fig. 1]

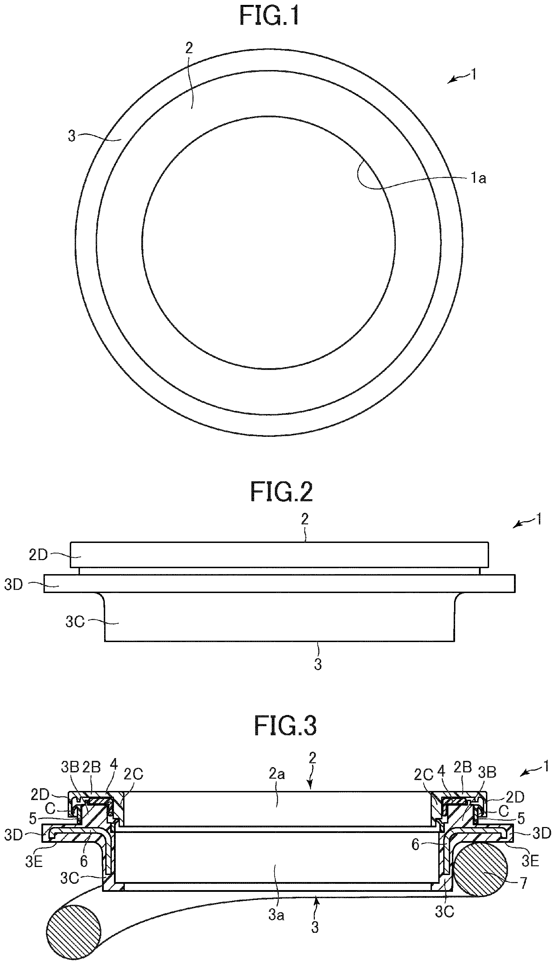

   Fig. 1 shows a plan view of a sliding bearing according to a first embodiment.
[Fig. 2]
   Fig. 2 shows a side view of a sliding bearing.
[Fig. 3]
   Fig. 3 shows a sectional view of a sliding bearing.
[Fig. 4]

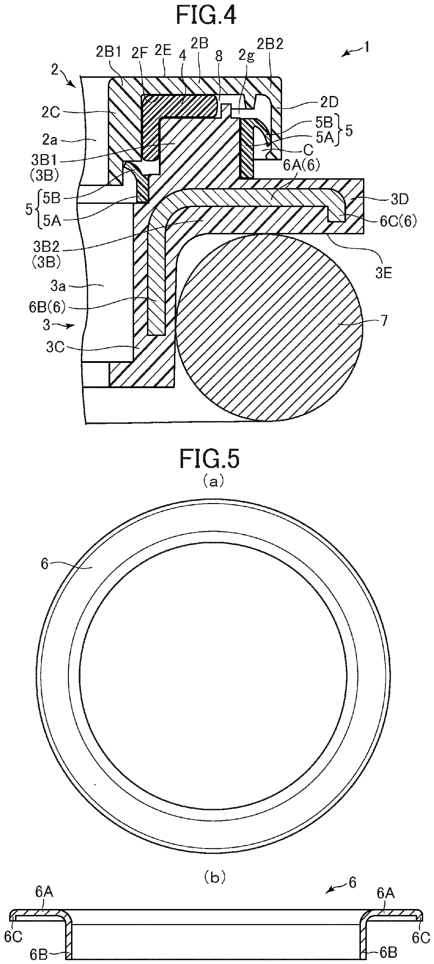

   Fig. 4 shows a partial enlarged sectional view of a sliding bearing.
[Fig. 5]
   Fig. 5(a) shows a plan view of a reinforcing plate and Fig. 5(b) shows a sectional view of a reinforcing plate.
[Fig. 6]

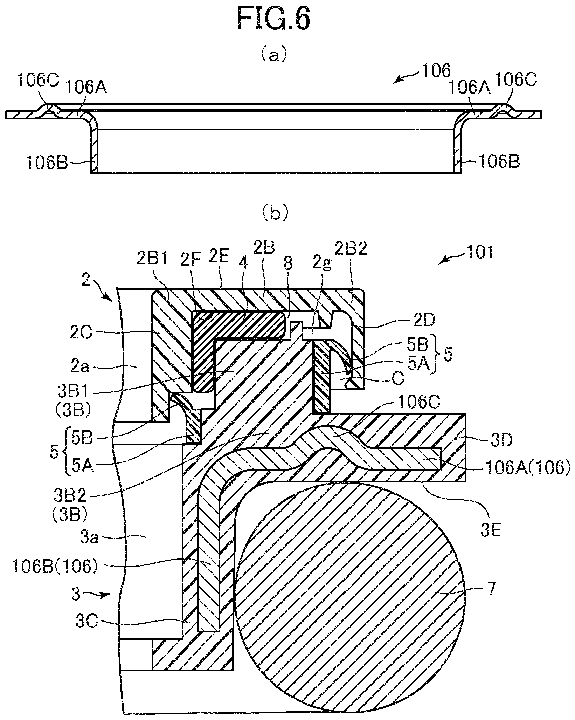

   Fig. 6(a) shows a sectional view of a reinforcing plate according to a second embodiment and Fig. 6(b) shows a partial enlarged sectional view of a sliding bearing according to the second embodiment.
[Fig. 7]

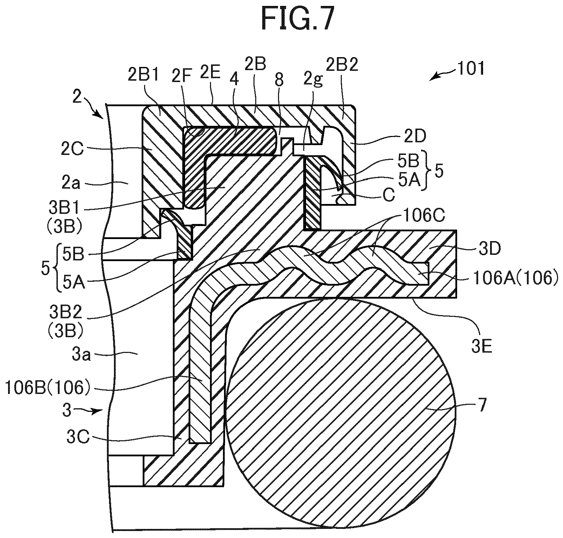

   Fig. 7 shows a sectional view of a reinforcing plate as a modification.

### [Description of Embodiments]

A sliding bearing 1 according to an embodiment of the present invention will be described with reference to the drawings.

The sliding bearing 1 is a thrust sliding bearing to be built into a strut type suspension in an automobile and has a housing hole 1a for housing a strut assembly, and supports a load of a vehicle body applied to the strut type suspension while allowing rotation of the strut assembly.

### <Overall configuration of sliding bearing 1>

Fig. 1 shows a plan view of the sliding bearing 1 according to the present embodiment, Fig. 2 shows a side view of the sliding bearing 1, Fig. 3 shows a sectional view of the sliding bearing 1, and Fig. 4 shows a partial enlarged sectional view of the sliding bearing 1.

As shown in Fig. 1, the sliding bearing 1 has an annular shape and is provided with an upper case 2, a lower case 3, a center plate 4, a dust seal 5, and a reinforcing plate 6.

### <Upper case 2>

The upper case 2 is formed from a synthetic resin material with excellent sliding properties and is mounted to an upper mount that is a mounting mechanism of the strut assembly of the strut type suspension to the vehicle body in a state where the strut assembly is inserted into the upper case 2.

As shown in Fig. 3, the upper case 2 is annular and has an insertion hole 2a, and is provided with: an upper base 2B; an inner circumferential portion 2C; and an outer circumferential portion 2D. The strut assembly (not shown) is inserted into the insertion hole 2a. As shown in Fig. 4, the annular upper base 2B is provided with: a mounting surface 2E; and a load transmission surface 2F positioned on a side opposite to the mounting surface 2E. The upper mount is mounted to the mounting surface 2E when building the sliding bearing 1 into the strut assembly. The load transmission surface 2F transmits load of the vehicle body applied to the strut type suspension to the center plate 4.

The inner circumferential portion 2C protrudes from an inner circumferential edge 2B1 of the upper base 2B toward a side of the lower case 3, and forms a cylindrical shape. The outer circumferential portion 2D protrudes toward the side of the lower case 3 from an outer circumferential edge 2B2 of the upper base 2B and forms a cylindrical shape. An annular concave portion 2g is formed by the upper base 2B, the inner circumferential portion 2C, and the outer circumferential portion 2D.

### <Lower case 3>

The lower case 3 is formed from a synthetic resin material and is urged toward a side of the upper case 2 by a coil spring 7 of the strut type suspension in a state where the strut assembly of the strut type suspension is inserted into the lower case 3. The lower case 3 is combined so as to be rotatable relative to the upper case 2.

The lower case 3 includes an insertion hole 3a and has an annular shape, and is provided with: a lower base 3B; a case protrusion 3C; and a flange 3D. In the lower base 3B having a cylindrical shape, an upper side part 3B1 is positioned inside the annular concave portion 2g of the upper case 2 and a lower side part 3B2 is positioned outside the annular concave portion 2g. The upper case 2 and the upper side part 3B1 of the lower base 3B form an annular space 8 with an approximate L-shape in a sectional view which receive the center plate 4.

The case protrusion 3C protrudes from a lower end of an inner circumference of the lower side part 3B2 of the lower base 3B toward a side opposite to the side of the upper case 2. The flange 3D protrudes more outward in a radial direction than the outer circumferential portion 2D of the upper case 2 from an outer circumferential edge of the lower side part 3B2 of the lower base 3B. The upper base 2B and the outer circumferential portion 2D of the upper case 2 and the lower base 3B and the flange 3D of the lower case 3 form a labyrinth clearance C which is a curved narrow gap. In addition, an urged surface 3E which is abutted by the coil spring 7 and which receives an urging force thereof is defined in the lower side part 3B2 of the lower base 3B and the flange 3D on the side opposite to the side of the upper case 2.

### <Center plate 4>

The center plate 4 is a sliding bearing piece which is formed from a synthetic resin material with excellent sliding properties, to which a lubricant such as PTFE, a lubricating oil, and silicone is added when necessary, and which is provided inside the annular space 8. The center plate 4 has an approximate L-shape in a sectional view.

<Dust seal 5>

The dust seal 5 that is a seal member is formed from an elastic body such as a urethane resin and is mounted to an outer circumference and an inner circumference of the lower base 3B of the lower case 3. The dust seal 5 is provided with: a seal base 5A mounted to an outer circumference and an inner circumference of the upper side part 3B1 of the lower base 3B; and a lip portion 5B which extends toward sides of the outer circumferential portion 2D and the inner circumferential portion 2C of the upper case 2 from an upper end of the seal base 5A. The lip portion 5B of the dust seal 5 positioned on an outer circumferential side abuts against the outer circumferential portion 2D of the upper case 2 with an interference and closes the labyrinth clearance C, and prevents foreign objects from penetrating into the annular space 8.

### <Reinforcing plate 6>

Fig. 5(a) shows a plan view of the reinforcing plate 6 and Fig. 5(b) shows a sectional view of the reinforcing plate 6. As shown in Fig. 5, the reinforcing plate 6 has an annular shape and is formed from a corrosion-resistant material such as an SUS material or steel subjected to plate processing such as galvanizing.

In addition, as shown in Figs. 3 and 4, the reinforcing plate 6 is embedded in the lower case 3 by insert molding. The reinforcing plate 6 is provided with an annular plate base 6A and a cylindrical first plate protrusion 6B, and has an approximate L-shape in a sectional view. The plate base 6A is positioned in the lower side part 3B2 of the lower base 3B and the flange 3D of the lower case 3. A second plate protrusion 6C which protrudes toward a side of the urged surface 3E is provided on an outer circumferential edge of the plate base 6A. The first plate protrusion 6B extends from an inner circumferential edge of the plate base 6A toward the side opposite to the side of the upper case 2, and is positioned in the case protrusion 3C of the lower case 3.

### <Function and Effect>

With the sliding bearing 1 according to the present embodiment, the plate base 6A of the reinforcing plate 6 is embedded in the lower side part 3B2 of the lower base 3B and the flange 3D of the lower case 3. Accordingly, even if the coil spring 7 of the strut assembly abuts against the urged surface 3E of the lower case 3 and applies an urging force over a long period of time, a creep deformation or the like of the flange 3D of the lower case 3 can be inhibited by the plate base 6A of the reinforcing plate 6. Therefore, the flange 3D of the lower case 3 can be prevented from deforming, abutting against and pressing the outer circumferential portion 2D of the upper case 2, and causing the outer circumferential portion 2D to deform. As a result, since the labyrinth clearance C can be maintained and generation of abnormal noise due to interference of the upper case 2 and the lower case 3 can be prevented, the function of the sliding bearing 1 can be maintained over a long period of time.

In addition, the lower case 3 has the case protrusion 3C which protrudes from the lower side part 3B2 of the lower base 3B toward the side opposite to the side of the upper case 2, the reinforcing plate 6 has the first plate protrusion 6B which extends from the inner circumferential edge of the plate base 6A toward the side opposite to the side of the upper case 2, and the first plate protrusion 6B is embedded in the case protrusion 3C. According to this configuration, a resistive force of the correcting plate 6 with respect to an urging force from the coil spring 7 can be increased and a deformation of the flange 3D of the lower case 3 can be further inhibited.

In addition, the second plate protrusion 6C which protrudes toward a side of the urged surface 3E is provided on an outer circumferential edge of the plate base 6A of the reinforcing plate 6. According to this configuration, a resistive force of the correcting plate 6 with respect to an urging force from the coil spring 7 can be increased and a deformation of the flange 3D of the lower case 3 can be further inhibited.

Furthermore, the reinforcing plate 6 is formed from an SUS material or steel subjected to plate processing such as galvanizing. According to this configuration, even if the lower plate 3 cracks due to external impact, etc. and moisture or the like penetrates inside, an occurrence of corrosion of the reinforcing plate 6 can be prevented.

In addition, the sliding bearing 1 is provided with the dust seal 5 which is disposed between the outer circumferential portion 2D of the upper case 2 and the lower base 3B of the lower case 3 and which closes the labyrinth clearance C formed by the outer circumferential portion 2D of the upper case 2 and the lower base 3B of the lower case 3.

Since a creep deformation and the like of the flange 3D of the lower case 3 is inhibited by the plate base 6A of the reinforcing plate 6, the dust seal 5 is prevented from moving toward a side of the upper case 2 and a seal function by the dust seal 5 can be adequately maintained.

Next, a sliding bearing 101 according to a second embodiment of the present invention will be described with reference to Fig. 6. Moreover, same members as the sliding bearing 1 according to the first embodiment will be denoted by same reference numerals and descriptions thereof will be omitted, and only different portions will be described.

In the present embodiment, only a shape of a reinforcing plate 106 differs from the reinforcing plate 6 of the sliding bearing 1 according to the first embodiment. Fig. 6(a) shows a sectional view of the reinforcing plate 106 and Fig. 6(b) shows a partial enlarged sectional view of the sliding bearing 101. The reinforcing plate 106 has an annular shape and is formed from a corrosion-resistant material such as an SUS material or steel subjected to plate processing such as galvanizing.

As shown in Fig. 6(b), the reinforcing plate 106 is embedded in the lower case 3 by insert molding. The reinforcing plate 106 is provided with an annular plate base 106A and a cylindrical first plate protrusion 106B, and has an approximate L-shape in a sectional view. The plate base 106A is positioned in the lower side part 3B2 of the lower base 3B and the flange 3D of the lower case 3. A curved portion 106C forming a convex shape toward a side of the upper case 2 is provided in the plate base 106A. The first plate protrusion 106B extends from an inner circumferential edge of the plate base 106A toward the side opposite to the side of the upper case 2, and is positioned in the case protrusion 3C of the lower case 3.

Due to the curved portion 106C of the plate base 106A of the reinforcing plate 106, a resistive force of the correcting plate 106 with respect to an urging force from the coil spring 7 can be increased and a deformation of the flange 3D of the lower case 3 can be further inhibited.

It is to be understood that the present invention is not limited to the embodiment described above and various modifications may be made within the spirit and scope of the invention.

For example, as shown in Fig. 7, two curved portions 106C forming a convex shape toward a side of the upper case 2 may be provided in the plate base 106A of the reinforcing plate 106. According to this configuration, due to the two curved portions 106C, a resistive force of the correcting plate 106 with respect to an urging force from the coil spring 7 can be increased and a deformation of the flange 3D of the lower case 3 can be further inhibited.

In addition, while the sliding bearings 1 and 101 described above are provided with the dust seal 5, the dust seal 5 need not be provided. When the dust seal 5 is not provided, the labyrinth clearance C in the sliding bearings 1 and 101 is constructed to be extremely narrow.

While the reinforcing plate 6 according to the first embodiment has the first and second plate protrusions 6B and 6C, the reinforcing plate 6 may have only one of the two plate protrusions or the reinforcing plate 6 may be solely formed by the plate base 6A.

### [Reference Signs List]

- 1, 101: Sliding bearing
- 2: Upper case
- 2B: Upper base
- 2B1: Inner circumferential edge
- 2B2: Outer circumferential edge
- 2C: Inner circumferential portion
- 2D: Outer circumferential portion
- 2g: Annular concave portion
- 3: Lower case
- 3B1: Upper side part
- 3B2: Lower side part
- 3C: Case protrusion
- 3D: Flange
- 3E: Urged surface
- 5: Dust seal
- 6, 106: Reinforcing plate
- 6A, 106A: Plate base
- 6B, 106B: First plate protrusion
- 6C: Second plate protrusion
- 106C: Curved portion

## Claims

1. A sliding bearing having an annular shape and comprising: an upper case formed from a synthetic resin material; a lower case formed from a synthetic resin material and combined so as to be rotatable relative to the upper case; a sliding bearing piece disposed between the upper case and the lower case; and a reinforcing plate formed from a metal material, wherein
the upper case has: an upper base having an annular shape; an inner circumferential portion having a cylindrical shape and extending from an inner circumferential edge of the upper base toward a side of the lower case; and an outer circumferential portion having a cylindrical shape and extending toward the side of the lower case from an outer circumferential edge of the upper base, the upper base, the inner circumferential portion, and the outer circumferential portion forming an annular concave portion,
the lower case has: a lower base having an annular shape and having an upper side part positioned in the annular concave portion of the upper case and a lower side part positioned outside the annular concave portion; and a flange protruding outward in a radial direction from an outer circumferential edge of the lower side part and opposing the outer circumferential portion of the upper base of the upper case in an axial direction, and a urged surface against which a coil spring abuts and which receives an urging force of the coil spring is formed in the lower side part and the flange on a side opposite to a side of the upper case, and the reinforcing plate is annular and has a plate base that is embedded in the lower side part and the flange of the lower case.

2. The sliding bearing according to claim 1, wherein the lower case has a case protrusion which protrudes from the lower side part of the lower base toward the side opposite to the side of the upper case, and
the reinforcing plate has a first plate protrusion which extends from an inner circumferential edge of the plate base toward the side opposite to the side of the upper case, and the first plate protrusion is embedded in the case protrusion.

3. The sliding bearing according to claim 1 or 2, wherein a second plate protrusion which protrudes toward a side of the urged surface is provided on an outer circumferential edge of the plate base of the reinforcing plate.

4. The sliding bearing according to claim 1 or 2, wherein the plate base of the reinforcing plate has a curved portion.

5. The sliding bearing according to any one of claims 1 to 4, wherein the reinforcing plate is formed from an SUS material or steel with a surface subjected to plate processing.

6. The sliding bearing according to any one of claims 1 to 5, further comprising a seal member which is disposed between the outer circumferential portion of the upper case and the lower base of the lower case and which closes a gap formed by the outer circumferential portion of the upper case and the lower base of the lower case.
